# FASCICULE DE BREVET EUROPEEN

(11) **EP 3 357 752 B1**
(45) Date de publication et mention de la délivrance du brevet: **17.04.2024**
(21) Numéro de dépôt: 18153896.8
(22) Date de dépôt: 29.01.2018
(51) Int. Cl.: B60Q 1/14, F21S 41/143, F21S 41/255, F21S 41/26, F21S 41/265, F21S 41/32, F21S 41/36, F21S 41/43, F21S 41/663, F21S 41/40

(54) **MODULE D'ÉCLAIRAGE D'UN FAISCEAU LUMINEUX POUR PROJECTEUR DE VÉHICULE AUTOMOBILE**
BELEUCHTUNGSMODUL MIT LICHTBÜNDEL FÜR KRAFTFAHRZEUGSCHEINWERFER
LIGHTING MODULE OF A LIGHT BEAM FOR A MOTOR VEHICLE HEADLIGHT

(30) Priorité: 01.02.2017 FR 1750842
(43) Date de publication de la demande: 08.08.2018
(73) Titulaire: Valeo Vision, 93012 Bobigny Cedex (FR)
(72) Inventeur: BOURDIN, David, 93012 Bobigny Cedex (FR); ANDRE, Stephane, 93012 Bobigny Cedex (FR); MAIRET, Fabrice, 93012 Bobigny Cedex (FR); MARCHAL, Orane, 93012 Bobigny Cedex (FR); FUJITA, Ran, 93012 Bobigny Cedex (FR); DONOSO, Sergio, 23600 Martos (ES)
(74) Mandataire: Valeo Visibility

(56) Documents cités:
- EP-A1- 2 523 022
- EP-A1- 2 982 902
- EP-A2- 1 701 087
- CN-A- 104 373 901
- CN-A- 104 832 859
- DE-A1-102008 051 915
- JP-A- 2013 239 362
- US-A1- 2014 092 619
- US-A1- 2015 241 030

## Description

### Domaine technique

La présente invention se situe dans le domaine de l'industrie automobile, et concerne plus particulièrement des dispositifs d'éclairages, notamment des projecteurs pour véhicules automobiles. En particulier, la présente invention concerne un module d'éclairage permettant de générer au moins deux faisceaux lumineux.

### État de la technique antérieure

Dans ce domaine, on connaît des modules d'éclairage permettant de générer un faisceau lumineux du type d'un feu de croisement, ou code, d'une portée avoisinant 70 mètres, utilisé essentiellement la nuit, et dont la configuration dudit faisceau lumineux est telle qu'elle permet de ne pas éblouir le conducteur d'un véhicule automobile croisé ou suivi. Typiquement, un tel faisceau lumineux présente une zone de coupure prenant notamment la forme d'une courbe de changement de contraste dont :
- une première partie est située en-dessous de l'horizon d'un premier côté de la route sur lequel un véhicule automobile arrivant en sens inverse est susceptible de se trouver ;
- une deuxième partie est située au-dessus de l'horizon d'un deuxième côté de la route opposé au premier côté par rapport à une ligne centrale de ladite route ;
- une partie intermédiaire, oblique, reliant la première partie de la deuxième partie de la courbe de changement de contraste au niveau d'une région centrale.

Les documents EP 1 701 087 A2 et JP 2013 239362 A décrivent des modules d'éclairage connus.

On connaît des modules d'éclairage permettant de générer alternativement un premier faisceau lumineux du type du feu de croisement précédemment décrit, et un deuxième faisceau lumineux du type d'un feu de route. De tels modules d'éclairage mettent en oeuvre une première source lumineuse associée à un premier collimateur afin de générer le premier faisceau lumineux, et une deuxième source lumineuse associée à un deuxième collimateur afin de générer un premier faisceau complémentaire qui forme le deuxième faisceau lumineux en collaboration avec le premier faisceau lumineux.

Dans le cas d'un module d'éclairage parfaitement réglé, le premier faisceau complémentaire généré par la deuxième source lumineuse devrait être mis en forme, orienté et positionné de manière à juxtaposer parfaitement le premier faisceau lumineux généré par la première source lumineuse, de sorte que le deuxième faisceau lumineux présenterait alors une photométrie quasiment symétrique par rapport à un axe médian, l'éclairage de la route étant sensiblement homogène d'un bord à l'autre de ladite route, notamment au-dessus de l'axe d'horizon.

En pratique, il est difficile d'obtenir une photométrie à la fois symétrique et homogène pour un faisceau lumineux de type feu de route généré par de tels modules d'éclairage. En effet, la complémentarité de la mise en forme, de l'orientation et du positionnement du premier faisceau complémentaire par rapport au premier faisceau lumineux sont très difficiles à obtenir, voire impossibles à obtenir.

Consécutivement, les modules d'éclairage agencés pour générer alternativement le premier faisceau lumineux de type feu de croisement et le deuxième faisceau lumineux de type feu de route présentent souvent une zone de contraste lumineux correspondant au défaut de correspondance entre le premier faisceau lumineux et le premier faisceau complémentaire. Cette zone de contraste peut être une zone de moindre contraste - correspondant à une zone plus sombre - si le premier faisceau complémentaire est distant du premier faisceau lumineux, ou elle peut être une zone de plus fort contraste - plus lumineuse - lorsque le premier faisceau complémentaire chevauche le premier faisceau lumineux. Souvent, la zone de contraste correspond au moins en partie à la zone de coupure du premier faisceau lumineux.

Consécutivement, l'impossibilité de régler de manière optimale de tels modules d'éclairage à des coûts raisonnables pour le domaine automobile conduisent lesdits modules d'éclairages à être à l'origine d'un inconfort pour le conducteur du véhicule automobile qui perçoit au moins une partie de la zone de coupure, sous la forme d'une variation d'une densité d'éclairage de la partie de la route éclairée par le faisceau lumineux de type feu de route.

La présente invention a pour objet de répondre au moins en grande partie aux problèmes précédents et de conduire en outre à d'autres avantages en proposant un nouveau module d'éclairage pour véhicule automobile.

Un autre but de la présente invention est de réduire la visibilité de la zone de coupure lors de la génération d'un faisceau lumineux du type d'un feu de route pour un tel module d'éclairage.

Un autre but de la présente invention est de faciliter l'intégration des modules lumineux dans un projecteur de véhicule automobile.

### Exposé de l'invention

Selon un premier aspect de l'invention, on atteint au moins l'un des objectifs précités avec un module d'éclairage pour véhicule automobile tel que défini dans la revendication 1, ledit module d'éclairage comprenant (i) un support, (ii) une première source lumineuse et une deuxième source lumineuse solidaires du support, (iii) un premier collimateur et un deuxième collimateur, le premier collimateur étant agencé pour collecter au moins une partie des rayons lumineux émis par la première source lumineuse, et le deuxième collimateur étant agencé pour collecter au moins une partie des rayons lumineux émis par la deuxième source lumineuse, chaque collimateur étant aussi agencé pour rediriger lesdits rayons lumineux vers une lentille de projection solidaire du support, la lentille de projection étant agencée pour mettre en forme au moins une partie des rayons lumineux émis par les sources lumineuses afin de :
- projeter au moins une partie des rayons lumineux collectés par le premier collimateur en un premier faisceau lumineux comprenant une zone de coupure ; et
- projeter au moins une partie des rayons lumineux collectés par le premier collimateur et au moins une partie des rayons lumineux collectés par le deuxième collimateur en un deuxième faisceau lumineux, la partie des rayons lumineux collectés par le deuxième collimateur formant un premier faisceau complémentaire du premier faisceau lumineux, ledit deuxième faisceau lumineux étant formé par ledit premier faisceau lumineux et ledit premier faisceau complémentaire, ledit premier faisceau complémentaire étant délimité au moins en partie par la zone de coupure.

Le module d'éclairage conforme au premier aspect de l'invention comprend au moins une troisième source lumineuse et un dispositif optique agencé pour mettre en forme au moins une partie des rayons lumineux émis par la troisième source lumineuse de manière à former un deuxième faisceau complémentaire chevauchant au moins en partie la zone de coupure du premier faisceau lumineux, la troisième source et le dispositif optique étant solidaires du support.

Le support du module d'éclairage conforme au premier aspect de l'invention est une pièce de référence mécanique sur laquelle les différents éléments dudit module d'éclairage sont référencés afin de leur permettre de collaborer ensemble afin de générer au moins les premier et deuxième faisceaux lumineux permettant de produire un feu de route et - alternativement - un feu de croisement tels que décrits précédemment. À titre d'exemple non limitatif, le support du module d'éclairage conforme au premier aspect de l'invention peut prendre la forme d'une plaque ou d'au moins une partie d'un carter dudit module d'éclairage. Le support peut être métallique ou en matière plastique.

Par éléments du module d'éclairage, il convient de comprendre notamment la première, la deuxième et la troisième source lumineuse, les premier et deuxième collimateurs, la lentille de projection, ainsi que, d'une manière générale, tout organe du module d'éclairage participant de manière active ou passive à son fonctionnement.

Le module d'éclairage conforme au premier aspect de l'invention comprend ainsi au moins trois sources lumineuses distinctes permettant alternativement ou cumulativement de former respectivement le premier faisceau lumineux ou le deuxième faisceau lumineux. Chaque source lumineuse comprend au moins un élément d'émission lumineuse agencé pour émettre des rayons lumineux lorsqu'il est polarisé par un courant électrique. De manière préférentielle, l'élément d'émission lumineuse prend la forme d'une diode électroluminescente émettant au moins une partie de ses rayons lumineux dans le domaine spectral visible par un oeil humain. Ainsi, chaque source lumineuse du module d'éclairage conforme au premier aspect de l'invention peut comprendre une ou une pluralité de diodes électroluminescentes permettant de générer le premier et/ou le deuxième faisceau lumineux. Les diodes électroluminescentes formant chaque source lumineuse sont adressables sélectivement ou collectivement afin d'éclairer de manière plus précise des zones particulières de la route située devant le véhicule automobile.

Les première, deuxième et troisième sources lumineuses sont solidaires du support afin de permettre de les faire collaborer entre elles, notamment afin de générer le deuxième faisceau lumineux et/ou de permettre de réaliser un alignement suivant un axe optique du module d'éclairage conforme au premier aspect de l'invention et/ou par rapport à la lentille de projection. De manière avantageuse, les première et/ou deuxième et/ou troisième sources lumineuses sont fixées solidairement au support selon tous moyens de fixation connus, démontables ou non démontables. En particulier, chaque source lumineuse peut être fixée de manière immobile au support, au travers d'une liaison mécanique n'autorisant aucun degré de liberté entre la source lumineuse et le support. Dans ce cas, la position et/ou l'orientation et/ou l'alignement de chaque source lumineuse par rapport au support et/ou à la lentille de projection notamment sont réalisés au montage de ladite source lumineuse sur ledit support, selon un réglage d'usine non modifiable ultérieurement. Alternativement, chaque source lumineuse peut être fixée sur le support au travers d'une liaison mécanique autorisant au moins un degré de liberté par rapport au support et/ou à la lentille de projection et/ou au collimateur correspondant, afin de permettre un réglage de ladite source lumineuse pour réaliser par exemple un alignement optique nécessaire au bon fonctionnement du module d'éclairage.

Dans le module d'éclairage conforme au premier aspect de l'invention, chaque source lumineuse est associée à au moins un collimateur afin de collecter au moins une partie des rayons lumineux générés par ladite source lumineuse correspondante et de les rediriger vers une direction particulière, notamment la lentille de projection dudit module d'éclairage. De manière avantageuse, au moins une partie des collimateurs sont agencés pour former un profil de coupure sur le faisceau lumineux généré par le module d'éclairage, sans nécessiter d'élément additionnel, tel que par exemple une plaque métallique fixée entre le premier et le deuxième collimateur. Dans ce cas, l'au moins un collimateur agencé pour former le profil de coupure permet aussi de réfléchir au moins une partie des rayons lumineux collectés par le ou les autres collimateur(s), vers la lentille de projection.

Selon une variante de l'invention, le module d'éclairage peut comprendre une pluralité de premières sources lumineuses associées à une pluralité de premiers collimateurs, et/ou une pluralité de deuxièmes sources lumineuses associées à une pluralité de deuxièmes collimateurs, et/ou une pluralité de troisièmes sources lumineuses associées à une pluralité de troisièmes collimateurs.

Dans toutes les variantes de réalisation de l'invention, les sources lumineuses peuvent être adressées sélectivement ou collectivement.

Chaque collimateur est réalisé dans une matière plastique et/ou en verre. De manière avantageuse, chaque collimateur est formé d'un matériau transparent ayant un indice de réfraction supérieur à l'indice de réfraction de l'air. On utilisera préférentiellement du polycarbonate (PC) adapté à résister à la chaleur générée par les sources lumineuses. Le choix de ce matériau est particulièrement avantageux, dans la mesure où les sources lumineuses se trouvent à proximité des collimateurs correspondants. Dans d'autres exemples de réalisation, les collimateurs peuvent être constitués en carbonate de polypropylène (PPC) ou en polyméthacrylate de méthyle (PMMA).

Dans le module d'éclairage conforme au premier aspect de l'invention, la lentille de projection est agencée pour mettre en forme les rayons lumineux générés par les sources lumineuses et collectés par les collimateurs correspondant afin de former le faisceau lumineux correspondant et conforme à un feu de route ou à un feu de croisement tels que décrits précédemment.

La lentille de projection est réalisée dans une matière plastique et/ou en verre. On utilisera préférentiellement du polycarbonate (PC), du carbonate de polypropylène (PPC) ou du polyméthacrylate de méthyle (PMMA).

La lentille de projection est solidaire du support afin de collaborer avec la ou les sources lumineuses et leurs collimateurs respectifs pour générer les premier et deuxième faisceaux lumineux pour faciliter son alignement par rapport à l'axe optique du module d'éclairage conforme au premier aspect de l'invention. De manière avantageuse, la lentille de projection est fixée solidairement au support selon tous moyens de fixation connus, démontables ou non démontables. En particulier, la lentille de projection peut être fixée de manière immobile au support, au travers d'une liaison mécanique n'autorisant aucun degré de liberté entre ladite lentille de projection et le support. Dans ce cas, la position et/ou l'orientation et/ou l'alignement de la lentille de projection par rapport au support et/ou aux sources lumineuses et/ou aux collimateurs correspondants sont réalisés au montage de ladite lentille de projection sur ledit support, selon un réglage d'usine non modifiable ultérieurement. Alternativement, la lentille de projection peut être fixée sur le support au travers d'une liaison mécanique autorisant au moins un degré de liberté par rapport audit support et/ou aux sources lumineuses et/ou aux collimateurs correspondants, afin de permettre un réglage de ladite lentille de projection pour son alignement optique nécessaire au bon fonctionnement du module d'éclairage.

Le module d'éclairage conforme au premier aspect de l'invention permet ainsi de générer alternativement le premier faisceau lumineux correspondant au feu de croisement décrit précédemment, ou le deuxième faisceau lumineux correspondant au feu de route tel que décrit précédemment. De manière avantageuse, le module d'éclairage conforme au premier aspect de l'invention permet d'obtenir le deuxième faisceau lumineux par la superposition du deuxième faisceau complémentaire aux premier et deuxième rayons lumineux générés respectivement par les première et deuxième sources lumineuses. Le deuxième faisceau complémentaire est généré par la troisième source lumineuse et dédié spécifiquement au traitement de la zone de coupure du premier faisceau lumineux et visible dans le deuxième faisceau lumineux des modules d'éclairage connus. À cet effet, le deuxième faisceau complémentaire est mis en forme et/ou orienté et/ou positionné par le dispositif optique de manière à couvrir au moins partiellement la zone de coupure. Le dispositif optique peut prendre plusieurs formes selon différentes variantes de l'invention et qui seront décrites dans les paragraphes ci-après. D'une manière générale, le dispositif optique peut comprendre une lentille et/ou un réflecteur, utilisés seuls ou en combinaison avec notamment d'autres éléments optiques tels que le troisième collimateur.

Le module d'éclairage conforme au premier aspect de l'invention peut comprendre avantageusement au moins un des perfectionnements ci-dessous, les caractéristiques techniques formant ces perfectionnements pouvant être prises seules ou en combinaison :
- le dispositif optique est agencé pour former le deuxième faisceau complémentaire de manière à ce que ledit deuxième faisceau complémentaire est orienté vers une partie centrale de la zone de coupure afin de réduire la gêne liée à ladite zone de coupure ;
- selon une variante de réalisation, la lentille de projection agencée pour mettre en forme au moins une partie des rayons lumineux émis par les première et deuxième sources lumineuses forme une première lentille de projection, et le dispositif optique comprend au moins un troisième collimateur pour collecter au moins une partie des rayons lumineux émis par la troisième source lumineuse et pour les rediriger vers une deuxième lentille de projection configurée pour projeter au moins une partie des rayons lumineux collectés par le troisième collimateur afin de former un deuxième faisceau complémentaire chevauchant au moins en partie la zone de coupure du premier faisceau lumineux et/ou du deuxième faisceau lumineux. Dans ce cas, le dispositif optique comprend la deuxième lentille de projection. Avantageusement, la deuxième lentille de projection est de forme cylindrique au regard des rayons lumineux collectés par le troisième collimateur. Dans cette deuxième variante de réalisation, le troisième collimateur collectant les rayons lumineux générés par la troisième source lumineuse collabore avec la deuxième lentille de projection afin de former le deuxième faisceau complémentaire conforme à l'invention. Dans ce cas, la deuxième lentille de projection joue bien un rôle de mise en forme des rayons lumineux. Le deuxième faisceau lumineux est ainsi généré par le module d'éclairage conforme au premier aspect de l'invention par la collaboration des première et deuxième sources lumineuses - associées à leurs collimateurs respectifs - avec la première lentille de projection d'une part, et de la troisième source lumineuse - associée au troisième collimateur - avec la deuxième lentille de projection ;
- le deuxième et le troisième collimateur peuvent être issus de matière afin de réduire les coûts de fabrication desdits collimateurs et de faciliter les opération de montage et d'assemblage du module d'éclairage conforme au premier aspect de l'invention ;
- le troisième collimateur et/ou la troisième source lumineuse sont situés au-dessus ou en-dessous d'un plan comprenant l'axe optique du module d'éclairage afin de réduire la compacité dudit module d'éclairage ;
- la deuxième lentille de projection est située en-dessous ou au-dessus de la première lentille de projection afin de réduire la compacité du module d'éclairage ;
- selon une première version de réalisation, la deuxième lentille de projection est issue de matière avec la première lentille de projection. En d'autres termes, la première et la deuxième lentille sont formées par une même pièce optique comprenant plusieurs zones optiques différentes, avec des propriétés optiques et/ou des distances focales différentes, une première zone optique correspondant à la première lentille de projection, et une deuxième zone optique correspondant à la deuxième lentille de projection. Alternativement, selon une deuxième version de réalisation, la deuxième lentille de projection est rapportée à la première lentille de projection et fixée solidairement à ladite première lentille de projection par des moyens de fixation. Éventuellement, la première lentille de projection et la deuxième lentille de projection peuvent être solidaire l'une à l'autre par l'intermédiaire du support, chaque lentille de projection étant fixée solidairement au support, sans pour autant que lesdites lentilles de projection ne soient fixées solidairement l'une à l'autre au travers d'une liaison mécanique directe entre elles ;
- la première lentille de projection comprend un unique plan focal vers lequel le premier collimateur et le deuxième collimateur sont agencés pour rediriger les rayons lumineux correspondants. Cette configuration avantageuse permet de simplifier la conception et le montage du module d'éclairage ;
- le troisième collimateur est agencé pour rediriger rayons lumineux de la troisième source lumineuse vers un plan focal de la deuxième lentille de projection distinct du plan focal de la première lentille de projection ;
- une première distance focale séparant la première lentille de projection du plan focal de ladite première lentille de projection est supérieure à une deuxième distance focale séparant la deuxième lentille de projection du plan focal de ladite deuxième lentille de projection. Alternativement, une première distance focale séparant la première lentille de projection du plan focal de ladite première lentille de projection est inférieure à une deuxième distance focale séparant la deuxième lentille de projection du plan focal de ladite deuxième lentille de projection ;
- au moins un des premier et deuxième collimateurs s'étend en direction du plan focal de la première lentille de projection pour réfléchir une partie de la lumière émise par l'autre collimateur de façon à former la zone de coupure du premier faisceau lumineux et/ou du deuxième faisceau lumineux ;
- selon un premier mode de réalisation, au moins un des premier et deuxième collimateurs est agencé pour former la zone de coupure par réflexion externe d'au moins une partie des rayons lumineux collectés par l'autre collimateur. Dans ce premier mode de réalisation, la réflexion externe est obtenue par exemple par l'application d'un revêtement métallique sur au moins une partie d'une face de l'un au moins des premier ou deuxième collimateurs située en regard de l'autre collimateur, préférentiellement parallèlement - voire tangent - à l'axe optique, de sorte qu'au moins une partie des rayons lumineux collectés par l'autre collimateur se réfléchissent sur le revêtement métallique de manière à être redirigés vers la lentille de projection. Selon un deuxième mode de réalisation alternatif au premier mode de réalisation, au moins un des premier et deuxième collimateurs est agencé pour former la zone de coupure par réflexion vitreuse d'au moins une partie des rayons lumineux collectés par l'autre collimateur. Selon un troisième mode de réalisation alternatif ou complémentaire aux premier et deuxième modes de réalisation, au moins un des premier et deuxième collimateurs est agencé pour former la zone de coupure par réflexion totale d'au moins une partie des rayons lumineux provenant de la source lumineuse associée. À cet effet, l'au moins un collimateur est formé dans un matériau d'indice de réfraction tel qu'un rayon lumineux arrivant sur une paroi de l'au moins un collimateur avec un angle d'incidence supérieure à une valeur prédéterminée, est totalement réfléchi sur cette paroi, sans qu'une partie non négligeable de l'énergie dudit rayon lumineux ne soit transmise au travers de ladite paroi ;
- au moins un des premier et deuxième collimateurs comprend un revêtement réfléchissant disposé sur une partie dudit collimateur et destiné à réfléchir au moins une partie des rayons lumineux collectés par l'autre collimateur afin de permettre une réflexion totale telle que décrite précédemment ;

- la partie du collimateur sur laquelle le revêtement est disposé s'étend à partir du plan focal en direction de la source lumineuse correspondante ;
- le premier et/ou le deuxième et/ou le troisième collimateur sont séparés par un milieu d'indice de réfraction inférieur à un indice de réfraction desdits collimateurs :
- la première et/ou la deuxième et/ou la troisième sources lumineuses sont agencées de manière à émettre de rayons lumineux selon des directions sensiblement parallèles à un axe optique du module d'éclairage.

Selon un deuxième aspect de l'invention, il est proposé un projecteur de véhicule automobile comprenant au moins un module d'éclairage conforme au premier aspect de l'invention ou selon l'un quelconque de ses perfectionnements.

Des modes de réalisation variés de l'invention sont prévus, intégrant selon l'ensemble de leurs combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre une vue en perspective d'un exemple de réalisation d'un projecteur pour véhicule automobile conforme au deuxième aspect de l'invention ;
- la FIGURE 2 illustre une vue de côté d'un exemple de réalisation de module lumineux conforme au premier aspect de l'invention ;
- la FIGURE 3 illustre une vue de dessus de l'exemple de réalisation du module lumineux illustré sur la FIGURE 2
- les FIGURES 4A, 4B et 4C illustrent respectivement un premier faisceau lumineux généré par le module d'éclairage illustré sur les FIGURES précédentes, un premier faisceau complémentaire au premier faisceau lumineux et un deuxième faisceau complémentaire permettant de réduire le contraste lumineux au niveau de la zone de coupure.

Sur les figures, les éléments communs à plusieurs figures conservent la même référence.

### Description détaillée de l'invention

Dans la suite de la description, les dénominations « longitudinale », « latérale », « dessus », « dessous », « devant », « derrière » se réfèrent à l'orientation du module lumineux tel qu'il est destiné à être intégré dans un projecteur avant de véhicule automobile. Plus particulièrement, une direction longitudinale correspond à un axe optique A le long duquel les rayons lumineux générés par le module d'éclairage 100 s'étendent majoritairement. L'orientation latérale correspond à une première direction perpendiculaire à l'axe optique A et qui s'étend horizontalement. Enfin, la direction verticale correspond à une deuxième direction perpendiculaire à l'axe optique A et à la première direction perpendiculaire, la direction verticale s'étendant verticalement.

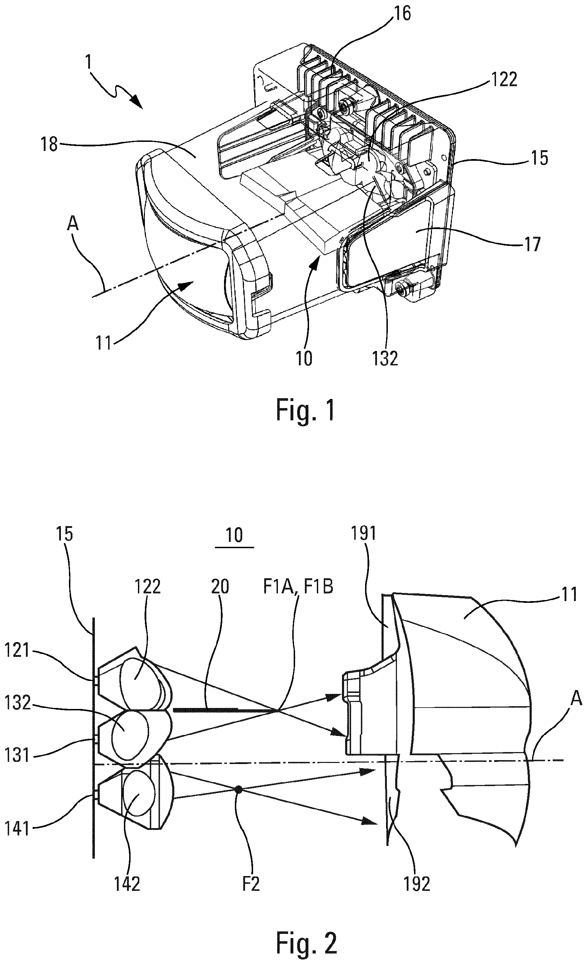

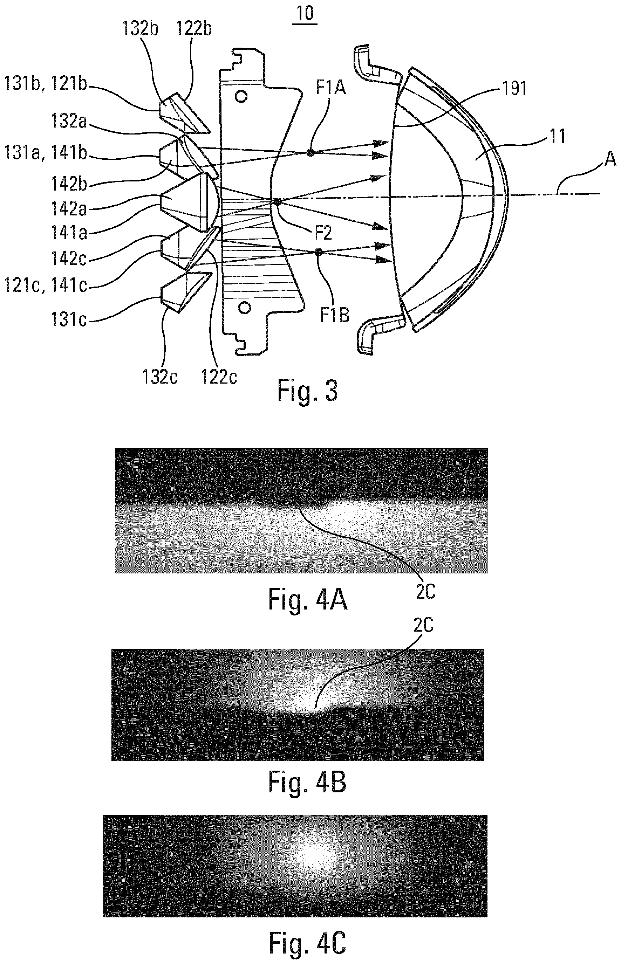

En référence à la FIGURE 1, un projecteur 1 de véhicule automobile est représenté, et plus particulièrement un projecteur avant, le projecteur 1 comprenant un module d'éclairage 10 agencé pour générer et projeter un ou plusieurs types de faisceaux lumineux sur une route. En particulier, le module d'éclairage 10 est agencé pour pouvoir générer alternativement ou simultanément un faisceau lumineux de type feux de croisement et un faisceau lumineux de type feux de route. Comme décrit précédemment, le faisceau lumineux de type feu de croisement présente un une zone de coupure Zc afin d'éviter d'éblouir les conducteurs des véhicules circulant en sens inverse sur la route ; et le faisceau lumineux de type feu de route présente un éclairage de la route que l'on souhaite sans profil de coupure. À cet effet, et conformément au premier aspect de l'invention, le module d'éclairage 10 met en oeuvre un dispositif optique permettant d'améliorer l'homogénéité de l'éclairage du faisceau de type feu de route, notamment en réduisant les variations de contraste lumineux au niveau de la zone de coupure Zc. Les spécificités du module d'éclairage 10 conforme au premier aspect de l'invention seront décrites plus particulièrement en référence aux FIGURES 2 et 3.

Le projecteur 1 comprend une plaque de montage 15 située en face arrière dudit projecteur et sur laquelle sont montés des sources lumineuses et des collimateurs 122, 132 du module d'éclairage 10. La plaque de montage est associée à un boîtier 18 maintenu par des pattes de fixation 17 situées en périphérie de la plaque de montage 15, préférentiellement sur les bords latéraux du projecteur 1. Vers l'avant, le projecteur 1 est fermé par une glace transparente 11 pouvant être traversée par les faisceaux lumineux générés et projetés par le module d'éclairage 10 conforme au premier aspect de l'invention. D'une manière générale, le projecteur 1 peut ainsi recevoir dans son volume intérieur, délimité notamment par le boîtier 18, la plaque support 15 et la glace transparente 11, une pluralité de module lumineux 10 conformes au premier aspect de l'invention.

De manière avantageuse, un tel module d'éclairage 10 forme un sous-ensemble unitaire : il est agencé pour pouvoir créer et mettre en forme au moins les faisceaux de type feu de route et feu de croisement décrits précédemment, sans avoir besoin d'être associé à d'autres sources lumineuses situées en dehors dudit module d'éclairage 10. Le module d'éclairage 10 est solidarisé sur le boîtier du projecteur via un moyen de réglage permettant de modifier une hauteur de l'axe optique A, et/ou une direction latérale.

Afin de dissiper les calories produites notamment par les sources lumineuses et/ou leurs électroniques associées, le projecteur 1 comprend un échangeur thermique qui prend ici la forme d'un dissipateur à ailettes 16. Les ailettes sont disposées sur la plaque support 15, en regard de la glace transparente 11, et de manière périphérique auxdites sources lumineuses et/ou collimateurs 122, 132. Éventuellement, le projecteur 1 peut comprendre aussi un autre dissipateur thermique à ailettes situé sur la face arrière dudit projecteur 1, à l'opposé du dissipateur à ailettes 16 par rapport à la plaque support 15.

Le module d'éclairage 10 comprend au moins une source de lumière visible sur les figures 2 et 3. Il comprend également au moins une lentille de projection 191 disposée dans le module d'éclairage 10 de manière à être traversée par les rayons lumineux émis par la source de lumière. Une telle lentille de projection participe à la formation du faisceau lumineux souhaité, qu'il s'agisse d'un faisceau de type feu de croisement ou un faisceau de type feu de route. La lentille de projection 191 forme une première extrémité longitudinale du module d'éclairage 10.

En référence aux FIGURES 2 et 3, un exemple de réalisation d'un module d'éclairage 10 conforme au premier aspect de l'invention va maintenant être décrit plus en détails.

Le module d'éclairage 10 comprend :
- la plaque support 15 ;
- une première source lumineuse 121 associée au premier collimateur 122 agencé d'une part pour collecter au moins une partie des rayons lumineux émis par au moins la première source lumineuse 121 et d'autre part pour rediriger lesdits rayons lumineux vers une première lentille de projection 191 solidaire de la plaque support 15 ;
- une deuxième source lumineuse associée au deuxième collimateur 132 agencé d'une part pour collecter au moins une partie des rayons lumineux émis par au moins la deuxième source lumineuse 131 et d'autre part pour rediriger lesdits rayons lumineux vers la première lentille de projection 191.

La première lentille de projection 191 est disposée le long de l'axe optique A. Elle est agencée pour projeter les rayons lumineux collectés par au moins les premier et deuxième collimateurs 122, 132 afin de réaliser l'un des deux modes d'éclairage décrit précédemment, en fonction de l'allumage de l'une ou des deux sources lumineuses 121, 131. En d'autres termes, la première lentille de projection 191 permet de :
- projeter au moins une partie des rayons lumineux collectés par le premier collimateur 122 en un premier faisceau lumineux comprenant une zone de coupure Zc ; et
- projeter au moins une partie des rayons lumineux collectés par le premier collimateur 122 et au moins une partie des rayons lumineux collectés par le deuxième collimateur 132 en un deuxième faisceau lumineux, la partie des rayons lumineux collectés par le deuxième collimateur 132 formant un premier faisceau complémentaire du premier faisceau lumineux, ledit deuxième faisceau lumineux étant formé par ledit premier faisceau lumineux et ledit premier faisceau complémentaire, ledit premier faisceau complémentaire étant délimité au moins en partie par la zone de coupure Zc.

La première lentille de projection 191 est préférentiellement du type convergent. La première lentille de projection 191 est solidaire du module d'éclairage 10, et plus particulièrement de la plaque support 15, par l'intermédiaire d'au moins un support de lentille - non représenté - permettant de réaliser le support mécanique de la première lentille de projection 191 et un référencement mécanique de la position de la première lentille de projection 191 par rapport aux première 121 et deuxième 131 sources lumineuses.

Conformément au premier aspect de l'invention, le module d'éclairage 10 comprend au moins une troisième source lumineuse 141 et un dispositif optique 142, 192 agencé pour mettre en forme au moins une partie des rayons lumineux émis par la troisième source lumineuse 141 de manière à former un deuxième faisceau complémentaire chevauchant au moins en partie la zone de coupure Zc du premier faisceau lumineux et/ou du deuxième faisceau lumineux.

Le premier faisceau lumineux correspond au faisceau de type feu de croisement décrit précédemment ; et le deuxième faisceau lumineux correspond au faisceau de type feu de route décrit précédemment.

La première 121, la deuxième 131 et la troisième 141 sources lumineuses sont solidaires de la plaque support 15. Par exemple elles sont soudées sur la plaque support 15.

Dans l'exemple illustré sur les FIGURES 2 et 3, le module d'éclairage 10 comprend une deuxième lentille de projection agencé pour former le deuxième faisceau complémentaire chevauchant au moins en partie la zone de coupure Zc du premier faisceau lumineux et/ou du deuxième faisceau lumineux. Ainsi, dans cet exemple de réalisation, le dispositif optique 142, 192 est formé par la deuxième lentille de projection 192 et par le troisième collimateur 142 configuré pour collecter les rayons lumineux générés par la troisième source lumineuse 141 et pour les rediriger vers ladite deuxième lentille de projection 192.

Comme décrit précédemment, chaque source lumineuse 121, 131, 141 est affectée à la génération de rayons lumineux et permettent, seules ou en combinaison, en collaboration avec les collimateurs 122, 132, 142 et la première lentille de projection 191 et/ou la deuxième lentille de projection 192 de projeter un faisceau lumineux de type « feu de croisement » ou « feu de route ».

À cet effet, les sources lumineuses sont avantageusement situées dans un même plan représenté sur la FIGURE 2 par le plan de la plaque support 15. Éventuellement, les sources lumineuses peuvent être situées dans différents plans. Avantageusement, elles sont toutes solidaires du même support.

Dans l'exemple de réalisation, la deuxième lentille de projection 192 est issue de matière avec la première lentille de projection 191. Éventuellement, la deuxième lentille de projection 192 peut être rapportée à la première lentille de projection 191. La deuxième lentille de projection 192 est avantageusement située en dessous de la première lentille de projection 191

La FIGURE 2 représentant le module d'éclairage 10 dans une vue en coupe selon un plan vertical, les sources lumineuses 121, 131, 141 et leurs collimateurs 122, 132, 142 respectifs sont réparties verticalement les unes au-dessus des autres. Plus particulièrement, la première source lumineuse 121 et la deuxième source lumineuse 131 sont situées d'un premier côté de l'axe optique A, et la troisième source lumineuse 141 est située d'un deuxième côté de l'axe optique A, opposé audit premier côté par rapport audit axe optique A. Par ailleurs, la première source lumineuse 121 est située à une distance plus grande de l'axe optique A que la deuxième source lumineuse 131.

De manière comparable, le premier collimateur 122 et le deuxième collimateur 132 sont situés du premier côté de l'axe optique A, et le troisième collimateur 142 est situé du deuxième côté de l'axe optique A, opposé audit premier côté par rapport audit axe optique A. Par ailleurs, le premier collimateur 122 est situé à une distance plus grande de l'axe optique A que le deuxième collimateur 132.

D'une manière générale, la configuration des collimateurs 122, 132, 142 est identique à la configuration des sources lumineuses 121, 131, 141.

Bien entendu, d'autres configurations des première 121, deuxième 131 et troisième 141 sources lumineuses et/ou des premier 122, deuxième 132 et troisièmes 142 collimateurs pourraient être envisagées sans sortir du contexte de la présente invention.

Dans l'exemple de réalisation illustré sur les FIGURES 2 et 3, les premier et deuxième collimateurs 122, 132 sont configurés pour rediriger les rayons lumineux générés par les première et deuxième sources lumineuses 121, 131 en direction d'un premier foyer F1A et d'un deuxième foyer F1B de la première lentille de projection 191 ; et le troisième collimateur 142 est configuré pour rediriger les rayons lumineux générés par la troisième source lumineuse 141 en direction d'un foyer F2 de la deuxième lentille de projection 192. Avantageusement, les premier F1A et deuxième F1B foyers de la première lentille de projection 191 sont situés dans un même plan focal perpendiculaire à l'axe optique A. Éventuellement, les premier F1A et deuxième F1B foyers de la première lentille de projection 191 peuvent être situés dans des plans focaux différents.

De manière comparable, le foyer F2 de la deuxième lentille de projection 192 d'une part et les premier F1A et deuxième F1B foyers de la première lentille de projection 191 d'autre part sont situés dans des plans focaux différents. Une distance focale séparant les premier F1A et deuxième F1B foyers de la première lentille de projection 191 est inférieure à une distance focale séparant le foyer F2 de la deuxième lentille de projection 192.

Dans le plan horizontal illustré sur la FIGURE 3, le module d'éclairage 10 comprend une pluralité de sources lumineuses et de collimateurs afin d'augmenter la puissance d'éclairage disponible pour ledit module d'éclairage 10, et de le rendre conforme aux normes d'éclairage en vigueur dans le domaine automobile. Chaque source lumineuse comprend au moins une diode électroluminescente et/ou une diode laser. Plus particulièrement :
- la première source lumineuse 121 comprend un premier élément d'éclairage 121a situé à proximité de l'axe optique A, un deuxième élément d'éclairage 121b situé d'un premier côté de l'axe optique A et un troisième élément d'éclairage 121c situé d'un deuxième côté de l'axe optique, opposé au premier côté par rapport au premier élément d'éclairage 121a, et préférentiellement dans une configuration symétrique ;
- la deuxième source lumineuse 131 comprend un premier élément d'éclairage 131a situé à proximité de l'axe optique A, un deuxième élément d'éclairage 131b situé d'un premier côté de l'axe optique A et un troisième élément d'éclairage 131c situé d'un deuxième côté de l'axe optique, opposé au premier côté par rapport au premier élément d'éclairage 131a, et préférentiellement dans une configuration symétrique ;
- la troisième source lumineuse 141 comprend un premier élément d'éclairage 141a situé à proximité de l'axe optique A, un deuxième élément d'éclairage 141b situé d'un premier côté de l'axe optique A et un troisième élément d'éclairage 141c situé d'un deuxième côté de l'axe optique, opposé au premier côté par rapport au premier élément d'éclairage 141a, et préférentiellement dans une configuration symétrique.

Chaque collimateur 122, 132, 142 s'étend en direction de la première 191 et/ou de la deuxième 192 lentille de projection pour réfléchir au moins une partie des rayons lumineux provenant de la source lumineuse 121, 131, 141 à laquelle ils sont associés.

Le module d'éclairage 10 comprend un élément optique 20 agencé pour réfléchir au moins une partie des rayons lumineux afin de définir la zone de coupure Zc du premier faisceau lumineux projeté par le module d'éclairage 10. Dans l'exemple illustré sur la FIGURE 2, l'élément optique 20 est formé par une plaque métallique dite plieuse.

De manière préférentielle, l'élément optique 20 est formé par une extension axiale le long de l'axe optique A du premier collimateur 122 qui peut s'étendre en direction de la première lentille jusqu'au premier et deuxième foyers F1a, F1b de la première lentille de projection 191 afin de réfléchir au moins une partie des rayons lumineux collectés par l'un et/ou l'autre des premier 122 et/ou deuxième 132 collimateurs pour former la zone de coupure Zc du premier faisceau lumineux projeté par le module d'éclairage 10 et/ou du deuxième faisceau lumineux projeté par le module d'éclairage 10.

À cet effet, dans cette forme de réalisation préférentielle, l'élément optique 20 comprend une surface de réflexion de la lumière issue du deuxième collimateur 132. Plus précisément, la zone de coupure Zc est produite par un élément de surface de l'élément optique 20 situé à proximité du premier et/ou deuxième foyer F1a, F1b de la première lentille de projection 191, ledit élément de surface formant un dioptre entre le premier collimateur 122 et un milieu ambiant du module d'éclairage 10, préférentiellement constitué d'air. La zone de coupure Zc est mise en oeuvre par une réflexion partielle externe de type réflexion vitreuse.

Conformément à son premier aspect, et tel que visible sur les FIGURES 4A, 4B et 4C, le module d'éclairage 10 permet de générer :
- un premier faisceau lumineux de type « feu de croisement » par la génération de rayons lumineux par la première source lumineuse 121, dont les rayons lumineux sont collectés par le premier collimateur 122 et envoyés en direction de la première lentille de projection 191. Un tel premier faisceau lumineux est illustré sur la FIGURE 4A ;
- un deuxième faisceau lumineux de type « feu de route » par, simultanément :
   ∘ la génération du premier faisceau lumineux décrit précédemment ;
   ∘ la génération d'un premier faisceau complémentaire grâce à la deuxième source lumineuse 131 et dont les rayons lumineux sont collectés par le deuxième collimateur 132 et envoyés en direction de la première lentille de projection 191. Un tel premier faisceau complémentaire est illustré sur la FIGURE 4B. le premier faisceau complémentaire éclaire une partie de la route située au-dessus de la zone de coupure Zc du premier faisceau lumineux et située au centre de la route. On constate que la zone de coupure Zc est toujours visible sur le premier faisceau complémentaire ;
   ∘ la génération d'un deuxième faisceau complémentaire grâce à la troisième source lumineuse 141 et dont les rayons lumineux sont envoyés en direction du dispositif optique 142, 192. Un tel deuxième faisceau complémentaire est illustré sur la FIGURE 4C, permettant d'estomper la visibilité de la zone de coupure Zc une fois combiné au premier faisceau lumineux et au premier faisceau complémentaire.

Ainsi, selon l'invention conforme à son premier aspect, le module d'éclairage 10 permet de produire un deuxième faisceau lumineux de type « feu de route » dans lequel la zone de coupure Zc est estompée grâce à la génération du deuxième faisceau complémentaire.

Selon une première variante de réalisation de l'invention, le dispositif optique 142, 192 comprend le troisième collimateur 142 agencé pour collecter au moins une partie des rayons lumineux émis par la troisième source lumineuse 141 et pour les rediriger de manière à chevaucher au moins en partie la zone de coupure Zc . Dans cette première variante de réalisation, le troisième collimateur est agencé pour permettre directement - sans autre composant optique - de mettre en forme le deuxième faisceau complémentaire de manière à ce qu'il atteigne une région centrale de la route et légèrement au-dessus de la zone de coupure Zc afin de chevaucher au moins en partie ladite zone de coupure Zc.

Éventuellement, en alternative au troisième collimateur, le dispositif optique 142, 192 peut comprendre une lentille ou un réflecteur permettant de collecter les rayons lumineux générés par la troisième source lumineuse afin de les mettre en forme et de les rediriger le long de l'axe optique A afin de chevaucher au moins en partie la zone de coupure Zc.

De manière avantageuse, le dispositif optique 142, 192 du module d'éclairage 10 peut comprendre la deuxième lentille de projection 192 de forme neutre au regard des rayons lumineux collectés par le troisième collimateur 142 afin de protéger le module d'éclairage 10.

Selon une deuxième variante de réalisation de l'invention, le dispositif optique 142, 192 comprend le troisième collimateur 142 et la deuxième lentille de projection 192. Dans ce cas, le troisième collimateur optique 142 est agencé pour collecter au moins une partie des rayons lumineux émis par la troisième source lumineuse 141 et pour les rediriger en direction de la deuxième lentille de projection 192. Contrairement à la première variante de réalisation, le troisième collimateur 142 ne met pas en forme les rayons lumineux collectés de manière à ce qu'ils soient configurés pour chevaucher au moins en partie la zone de coupure Zc ; c'est la deuxième lentille de projection 192 qui réalise cette fonction de mise en forme du deuxième faisceau complémentaire. À cet effet, la deuxième lentille de projection 192 est avantageusement de forme cylindrique.

Les collimateurs 122, 132, 142, sont avantageusement formés d'un matériau transparent ayant un indice de réfraction supérieur à l'indice de réfraction de l'air, de préférence du polycarbonate (PC) adapté à résister à la chaleur générée par les sources lumineuses 121, 131, 141 ou un matériau comprenant au moins en partie du carbonate de polypropylène (PPC) ou du polyméthacrylate de méthyle (PMMA).

En synthèse, l'invention concerne notamment un module d'éclairage pour véhicule automobile et comprenant :
- une première source lumineuse et un premier collimateur pour générer un premier faisceau lumineux de type « feu de croisement » en collaboration avec une première lentille de projection ; et
- une deuxième et une troisième sources lumineuses, la deuxième source lumineuse collaborant avec un deuxième collimateur pour générer un premier faisceau complémentaire au premier faisceau lumineux afin de former un deuxième faisceau lumineux de type « feu de route ». Afin de réduire la visibilité d'une zone de coupure Zc dans le deuxième faisceau, la troisième source lumineuse collabore avec un troisième collimateur et/ou une deuxième lentille de projection afin de former un deuxième faisceau complémentaire qui chevauche au moins en partie la zone de coupure Zc.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres.

## Revendications

1. Module d'éclairage (10) pour véhicule automobile, ledit module d'éclairage (10) comprenant :
- un support (15) ;
- une lentille de projection (191) solidaire du support (15) ;
- une première source lumineuse (121) et une deuxième source lumineuse (131) solidaires du support (15) ;
- un premier collimateur (122) et un deuxième collimateur (132), le premier collimateur (122) étant agencé pour collecter au moins une partie des rayons lumineux émis par la première source lumineuse (121) et le deuxième collimateur (132) étant agencé pour collecter au moins une partie des rayons lumineux émis par la deuxième source lumineuse (131), chaque collimateur étant aussi agencé pour rediriger lesdits rayons lumineux vers la lentille de projection (191) solidaire du support (15) ;
la lentille de projection (191) étant agencée pour mettre en forme au moins une partie des rayons lumineux émis par les sources lumineuses afin de :
∘ projeter au moins une partie des rayons lumineux collectés par le premier collimateur (122) en un premier faisceau lumineux comprenant une zone de coupure (Zc) ; et
∘ projeter au moins une partie des rayons lumineux collectés par le premier collimateur (122) et au moins une partie des rayons lumineux collectés par le deuxième collimateur (132) en un deuxième faisceau lumineux, la partie des rayons lumineux collectés par le deuxième collimateur (132) formant un premier faisceau complémentaire du premier faisceau lumineux, ledit deuxième faisceau lumineux étant formé par ledit premier faisceau lumineux et ledit premier faisceau complémentaire, ledit premier faisceau complémentaire étant délimité au moins en partie par la zone de coupure (Zc) ;
**caractérisé en ce que** le module d'éclairage (10) comprend au moins une troisième source (141) lumineuse et un dispositif optique (142, 192) agencé pour mettre en forme au moins une partie des rayons lumineux émis par la troisième source lumineuse (141) de manière à former un deuxième faisceau complémentaire chevauchant au moins en partie la zone de coupure (Zc) du premier faisceau lumineux, la troisième source (141) et le dispositif optique (142, 192) étant solidaires du support (15), dans lequel la lentille de projection agencée pour mettre en forme au moins une partie des rayons lumineux émis par les première (121) et deuxième (122) sources lumineuses forme une première lentille de projection (191), et dans lequel le dispositif optique (142, 192) comprend au moins un troisième collimateur (142) pour collecter au moins une partie des rayons lumineux émis par la troisième source lumineuse (141) et pour les rediriger vers une deuxième lentille de projection (192) issue de matière avec la première lentille de projection (191) ou rapportée à la première lentille de projection (191) et fixée solidairement à ladite première lentille de projection (191) par des moyens de fixation, ladite deuxième lentille de projection (192) étant configurée pour projeter au moins une partie des rayons lumineux collectés par le troisième collimateur (142) afin de former un deuxième faisceau complémentaire chevauchant au moins en partie la zone de coupure (Zc) du premier faisceau lumineux et/ou du deuxième faisceau lumineux.

2. Module d'éclairage (10) selon la revendication 1, dans lequel le dispositif optique (142, 192) est agencé pour former le deuxième faisceau complémentaire de manière à ce que ledit deuxième faisceau complémentaire est orienté vers une partie centrale de la zone de coupure (Zc).

3. Module d'éclairage (10) selon la revendication 1 ou 2, dans lequel la deuxième lentille de projection (192) est de forme cylindrique.

4. Module d'éclairage (10) selon l'une quelconque des revendications précédentes, dans lequel le troisième collimateur (142) et/ou la troisième source lumineuse (141) sont situés au-dessus ou en-dessous d'un plan comprenant un axe optique (A) du module d'éclairage (10).

5. Module d'éclairage (10) selon l'une quelconque des revendications précédentes, dans lequel la deuxième lentille de projection (192) est située en-dessous ou au-dessus de la première lentille (191) de projection.

6. Module d'éclairage (10) selon l'une quelconque des revendications précédentes, dans lequel la première lentille de projection (191) comprend un unique plan focal vers lequel le premier collimateur (122) et le deuxième collimateur (132) sont agencés pour rediriger les rayons lumineux correspondants.

7. Module d'éclairage (10) selon l'une quelconque des revendications précédentes, dans lequel le troisième collimateur (142) est agencé pour rediriger rayons lumineux de la troisième source lumineuse (141) vers un plan focal de la deuxième lentille de projection (192) distinct du plan focal de la première lentille de projection (191).

8. Module d'éclairage (10) selon la revendication 7, dans lequel une première distance focale séparant la première lentille de projection (191) du plan focal de ladite première lentille de projection (191) est supérieure à une deuxième distance focale séparant la deuxième lentille de projection (192) du plan focal de ladite deuxième lentille de projection (192).

9. Module d'éclairage (10) selon la revendication 7, dans lequel une première distance focale séparant la première lentille de projection (191) du plan focal de ladite première lentille de projection (191) est inférieure à une deuxième distance focale séparant la deuxième lentille de projection (192) du plan focal de ladite deuxième lentille de projection (192).

10. Projecteur (1) de véhicule automobile comprenant au moins un module d'éclairage (10) selon l'une quelconque des revendications précédentes.

## Patentansprüche

1. Beleuchtungsmodul (10) für ein Kraftfahrzeug, wobei das Beleuchtungsmodul (10) umfasst:
- einen Träger (15);
- eine Projektionslinse (191), die mit dem Träger (15) fest verbunden ist;
- eine erste Lichtquelle (121) und eine zweite Lichtquelle (131), die mit dem Träger (15) fest verbunden sind;
- einen ersten Kollimator (122) und einen zweiten Kollimator (132), wobei der erste Kollimator (122) dazu eingerichtet ist, mindestens einen Teil der von der ersten Lichtquelle (121) ausgesendeten Lichtstrahlen zu sammeln, und wobei der zweite Kollimator (132) dazu eingerichtet ist, mindestens einen Teil der von der zweiten Lichtquelle (131) ausgesendeten Lichtstrahlen zu sammeln, wobei jeder Kollimator auch dazu eingerichtet ist, die Lichtstrahlen zu der mit dem Träger (15) fest verbundenen Projektionslinse (191) umzulenken;
wobei die Projektionslinse (191) dazu eingerichtet ist, mindestens einen Teil der von den Lichtquellen ausgesendeten Lichtstrahlen zu formen, um:
∘ mindestens einen Teil der von dem ersten Kollimator (122) gesammelten Lichtstrahlen in einem ersten Lichtbündel zu projizieren, das einen-Hell-Dunkel-Grenzbereich (Zc) umfasst; und
∘ mindestens einen Teil der von dem ersten Kollimator (122) gesammelten Lichtstrahlen und mindestens einen Teil der von dem zweiten Kollimator (132) gesammelten Lichtstrahlen in einem zweiten Lichtbündel zu projizieren, wobei der Teil der von dem zweiten Kollimator (132) gesammelten Lichtstrahlen einen erstes komplementäres Bündel des ersten Lichtstrahls bildet, wobei das zweite Lichtbündel durch das erste Lichtbündel und das erste komplementäre Bündel gebildet wird, wobei das erste komplementäre Bündel mindestens zum Teil durch den Hell-Dunkel-Grenzbereich (Zc) begrenzt wird;
**dadurch gekennzeichnet, dass** das Beleuchtungsmodul (10) mindestens eine dritte Lichtquelle (141) umfasst und eine optische Vorrichtung (142, 192), die dazu eingerichtet ist, mindestens einen Teil der von der dritten Lichtquelle (141) ausgesendeten Lichtstrahlen so zu formen, dass ein zweites komplementäres Bündel gebildet wird, das den Hell-Dunkel-Grenzbereich (Zc) des ersten Lichtbündels mindestens zum Teil überlappt, wobei die dritte Quelle (141) und die optische Vorrichtung (142, 192) mit dem Träger (15) fest verbunden sind, bei dem die Projektionslinse, die dazu eingerichtet ist, mindestens einen Teil der von den ersten (121) und zweiten (122) Lichtquellen ausgesendeten Lichtstrahlen zu formen, eine erste Projektionslinse (191) bildet, und bei dem die optische Vorrichtung (142, 192) mindestens einen dritten Kollimator (142) umfasst, um mindestens einen Teil der von der dritten Lichtquelle (141) ausgesendeten Lichtstrahlen zu sammeln und um sie zu einer zweiten Projektionslinse (192) hin umzulenken, die einstückig mit der ersten Projektionslinse (191) ist oder an die erste Projektionslinse (191) angesetzt ist und an der ersten Projektionslinse (191) mit Befestigungsmitteln fest befestigt ist, wobei die zweite Projektionslinse (192) dazu ausgestaltet ist, mindestens einen Teil der von dem dritten Kollimator (142) gesammelten Lichtstrahlen zu projizieren, um ein zweites komplementäres Bündel zu bilden, das den Hell-Dunkel-Grenzbereich (Zc) des ersten Lichtbündels und/oder des zweiten Lichtbündels mindestens zum Teil überlappt.

2. Beleuchtungsmodul (10) nach Anspruch 1, bei dem die optische Vorrichtung (142, 192) dazu eingerichtet ist, das zweite komplementäre Bündel so zu bilden, dass das zweite komplementäre Bündel zu einem zentralen Teil des Hell-Dunkel-Grenzbereichs (Zc) hin ausgerichtet ist.

3. Beleuchtungsmodul (10) nach Anspruch 1 oder 2, bei dem die zweite Projektionslinse (192) zylindrisch ist.

4. Beleuchtungsmodul (10) nach einem der vorhergehenden Ansprüche, bei dem der dritte Kollimator (142) und/oder die dritte Lichtquelle (141) über oder unter einer Ebene gelegen sind, die eine optische Achse (A) des Beleuchtungsmoduls (10) umfasst.

5. Beleuchtungsmodul (10) nach einem der vorhergehenden Ansprüche, bei dem die zweite Projektionslinse (192) unter oder über der ersten Projektionslinse (191) gelegen ist.

6. Beleuchtungsmodul (10) nach einem der vorhergehenden Ansprüche, bei dem die erste Projektionslinse (191) eine einzige Brennebene umfasst, zu welcher der erste Kollimator (122) und der zweite Kollimator (132) die entsprechenden Lichtstrahlen umlenken sollen.

7. Beleuchtungsmodul (10) nach einem der vorhergehenden Ansprüche, bei dem der dritte Kollimator (142) dazu eingerichtet ist, Lichtstrahlen der dritten Lichtquelle (141) zu einer Brennebene der zweiten Projektionslinse (192) umzulenken, die verschieden von der Brennebene der ersten Projektionslinse (191) ist.

8. Beleuchtungsmodul (10) nach Anspruch 7, bei dem eine erste Brennweite, welche die erste Projektionslinse (191) von der Brennebene der ersten Projektionslinse (191) trennt, größer ist als eine zweite Brennweite, welche die zweite Projektionslinse (192) von der Brennebene der zweiten Projektionslinse (192) trennt.

9. Beleuchtungsmodul (10) nach Anspruch 7, bei dem eine erste Brennweite, welche die erste Projektionslinse (191) von der Brennebene der ersten Projektionslinse (191) trennt, kleiner ist als eine zweite Brennweite, welche die zweite Projektionslinse (192) von der Brennebene der zweiten Projektionslinse (192) trennt.

10. Scheinwerfer (1) für ein Kraftfahrzeug, der mindestens ein Beleuchtungsmodul (10) nach einem der vorhergehenden Ansprüche umfasst.

## Claims

1. Lighting module (10) for an automotive vehicle, said lighting module (10) comprising:
- a support (15);
- a projection lens (191) secured to the support (15);
- a first light source (121) and a second light source (131) secured to the support (15);
- a first collimator (122) and a second collimator (132), the first collimator (122) being arranged to collect at least a part of the light rays emitted by the first light source (121) and the second collimator (132) being arranged to collect at least a part of the light rays emitted by the second light source (131), each collimator also being arranged to redirect said light rays towards the projection lens (191) secured to the support (15);
the projection lens (191) being arranged to shape at least a part of the light rays emitted by the light sources in order to:
∘ project at least a part of the light rays collected by the first collimator (122) in a first light beam comprising a cut-off zone (Zc); and
∘ project at least a part of the light rays collected by the first collimator (122) and at least a part of the light rays collected by the second collimator (132) in a second light beam, the part of the light rays collected by the second collimator (132) forming a first beam complementary to the first light beam, said second light beam being formed by said first light beam and said first complementary beam, said first complementary beam being delimited at least partly by the cut-off zone (Zc);
**characterized in that** the lighting module (10) comprises at least one third light source (141) and an optical device (142, 192) arranged to shape at least a part of the light rays emitted by the third light source (141) so as to form a second complementary beam at least partly overlapping the cut-off zone (Zc) of the first light beam, the third source (141) and the optical device (142, 192) being secured to the support (15), wherein the projection lens arranged to shape at least a part of the light rays emitted by the first (121) and second (122) light sources forms a first projection lens (191), and wherein the optical device (142, 192) comprises at least one third collimator (142) for collecting at least a part of the light rays emitted by the third light source (141) and for redirecting them towards a second projection lens (192) integral with the first projection lens (191) or added to the first projection lens (191) and securely fastened to said first projection lens (191) by fastening means, said second projection lens (192) being configured to project at least a part of the light rays collected by the third collimator (142) in order to form a second complementary beam at least partly overlapping the cut-off zone (Zc) of the first light beam and/or of the second light beam.

2. Lighting module (10) according to Claim 1, wherein the optical device (142, 192) is arranged to form the second complementary beam in such a way that said second complementary beam is oriented towards a central part of the cut-off zone (Zc).

3. Lighting module (10) according to Claim 1 or 2, wherein the second projection lens (192) is of cylindrical shape.

4. Lighting module (10) according to any one of the preceding claims, wherein the third collimator (142) and/or the third light source (141) are situated above or below a plane comprising an optical axis (A) of the lighting module (10).

5. Lighting module (10) according to any one of the preceding claims, wherein the second projection lens (192) is situated below or above the first projection lens (191).

6. Lighting module (10) according to any one of the preceding claims, wherein the first projection lens (191) comprises a single focal plane towards which the first collimator (122) and the second collimator (132) are arranged to redirect the corresponding light rays.

7. Lighting module (10) according to any one of the preceding claims, wherein the third collimator (142) is arranged to redirect light rays from the third light source (141) towards a focal plane of the second projection lens (192) that is distinct from the focal plane of the first projection lens (191).

8. Lighting module (10) according to Claim 7, wherein a first focal distance separating the first projection lens (191) from the focal plane of said first projection lens (191) is greater than a second focal distance separating the second projection lens (192) from the focal plane of said second projection lens (192).

9. Lighting module (10) according to Claim 7, wherein a first focal distance separating the first projection lens (191) from the focal plane of said first projection lens (191) is less than a second focal distance separating the second projection lens (192) from the focal plane of said second projection lens (192).

10. Automotive vehicle headlight (1) comprising at least one lighting module (10) according to any one of the preceding claims.
